# EUROPEAN PATENT SPECIFICATION

(11) **EP 3 714 305 B1**
(45) Date of publication and mention of the grant of the patent: **28.12.2022**
(21) Application number: 18815031.2
(22) Date of filing: 20.11.2018
(51) Int. Cl.: G02B 13/00, G02B 21/00, G02B 21/02, G02B 7/04, G02B 3/14

(54) **LENS SYSTEM INTENDED FOR MICROSCOPIC OBSERVATION AND OPERATIONALLY ASSOCIABLE WITH AN IMAGE ACQUISITION DEVICE AND A LIGHT SOURCE**
ZUR MIKROSKOPISCHEN BEOBACHTUNG BESTIMMTES LINSENSYSTEM, DAS MIT EINER BILDAUFNAHMEVORRICHTUNG UND EINER LICHTQUELLE VERBUNDEN WERDEN KANN
SYSTÈME DE LENTILLE DESTINÉ À UNE OBSERVATION MICROSCOPIQUE ET POUVANT ÊTRE ASSOCIÉ DE MANIÈRE FONCTIONNELLE À UN DISPOSITIF D'ACQUISITION D'IMAGE ET À UNE SOURCE DE LUMIÈRE

(30) Priority: 21.11.2017 IT 201700132836
(43) Date of publication of application: 30.09.2020
(73) Proprietor: Fondazione Istituto Italiano di Tecnologia, 16163 Genova (IT); Smartmicrooptics S.r.l., 16164 Genova (IT)
(72) Inventor: ANTONINI, Andrea, 16152 Genova (IT)
(74) Representative: Vitillo, Giuseppe
(86) International application number: PCT/IB2018/059120
(87) International publication number: WO 2019/102342

(56) References cited:
- WO-A1-2015/033817
- US-A1- 2008 007 623
- US-A1- 2014 362 239
- US-A1- 2015 116 562

## Description

### Technical field

The present invention relates to a lens system intended for microscopic observation and operationally associable with an image acquisition device and a light source.

### Background art

Several examples can be found in the prior art which relate to devices allowing the use of portable cameras as microscopes.

Some solutions consist of individual lenses suitably applied directly onto the camera; one example is described in patent application WO 2017/013553 A1.

Other widespread solutions propose lens systems with rigid supports that require the sample to be positioned at a predefined work distance.

A further example of a lens system made in accordance with the prior art is the one described in United States patent US 2014/0362239 A1. In said patent application, a lens is obtained from elastomeric material (PDMS) and is included in a support structure made of the same material. The lens system described in said United States patent application comprises at least one compressible spacer.

More in detail, in United States patent application US 2014/0362239 A1 the above-mentioned lens has a planar surface and a curved surface. The lens can be applied to a device containing a camera by means of a self-adhering surface. Thus, the combination can function as a microscope. The structure also includes at least one soft spacer capable of spacing out the lens from the sample to be observed. By applying pressure onto the soft spacer, it is possible to change the work distance in order to bring the sample into focus.

However, United States patent application US 2014/0362239 A1 suffers from some drawbacks.

One drawback is that the above-mentioned patent application concerns a solution consisting of an individual lens wherein the curved surface is intended to face towards the sample, and is not suitable for obtaining portable mini-objectives having more than one lens. Focus variation is achieved by moving closer the slide with the sample to be observed by applying pressure onto the compressible elements, thus changing the work distance. Besides, the use of extremely non-stick elastomers, such as PDMS, makes the system unfit for union with other material types.

A further example of a lens system made in accordance with the prior art is the one described in the publication by A. ARPA, G. WETZSTEIN, D. LANMAN, R. RASKAR, entitled "SINGLE LENS OFF-CHIP CELLPHONE MICROSCOPY", disclosed in IEEE Computer Society Conference on Computer Vision and Pattern Recognition Workshops (pp. 23-28). Los Alamitios, CA: IEEE Computer Society, 2012.

The above-mentioned publication proposes an optical system for transforming a cellphone containing a camera into a low-cost microscopy device. The system essentially consists of a single objective lens in "off-chip" configuration, which is positioned directly on the sample to be observed, at a distance equal to its focal length. Optical magnification is independent of the distance between the camera and the sample; it depends exclusively on the ratio between the focal length of the camera and the focal length of the objective lens. The camera can be moved freely around the objective lens, thus allowing different points of view of the same sample. In addition, the system comprises a sample backlighting device, e.g. a LED.

However, said publication suffers from several drawbacks.

One drawback is that the system described in said publication consists of a single low-cost lens with limited resolution power compared to multi-lens solutions. Moreover, optical aberrations are present at the edges of the generated image, which can be corrected either through the use of more expensive lenses or via computational techniques.

Another drawback relates to the fact that the system described in said publication does not allow for focal length changes, because the objective consists of a single lens; adding to the fact that the support whereon the objective lens is positioned is rigid, this does not permit changing the work distance.

A further example of a lens system made in accordance with the prior art is the one by K. Yoshino, described on the Internet site published at the address http://makezine.com/projects/smartphone-microscope/.

The solution proposed on the above-mentioned Internet site allows building a low-cost smartphone-based microscopy system. In a particular configuration, the system contains a focus lens of a laser pointer (or two lenses in "stacked" configuration) inserted into a first Plexiglas surface. A second Plexiglas surface serves as a support for laying the sample to be observed, while in the plywood base it is possible to position a light source for backlighting. Focusing is achieved by changing the distance between the two Plexiglas surfaces through a screw mechanism that also includes some springs, for the purpose of optimally stabilizing the surface whereon the sample will be laid and obtaining more accurate focus adjustments.

If the system comprises two lenses, the focal length is still constant because the distance between the two lenses remains fixed after construction. In this configuration as well, therefore, focusing is achieved by changing the work distance, i.e. by moving closer or farther the second Plexiglas surface whereon the sample has been laid. This movement is possible because of a screw system that also includes some springs in the portion between the two Plexiglas surfaces; in this way, it is possible to change the work distance in a precise manner and to stabilize the sample surface by making up for any mechanical play.

In addition, US 2008/007623 A1 discloses a camera module having an array lens, wherein a first lens group has at least two lenses. A second lens group has a plurality of lenses corresponding to the lenses of the first lens group, the second lens group stacked below the first lens group and interposing a spacer part therebetween. An image sensor has an imaging region where light passing through the first and second lens groups is imaged. Also, a shielding unit shields portions excluding apertures of the lenses of the first and second lens groups, the shielding unit disposed between the first and second lens groups. The camera module has a lower optical system along an optical axis for smaller size, keeps light refracted from an adjacent lens from affecting an image, blocks leakage of light for imaging and increases definition of the image through signal processing.

### Summary of the invention

It is one of the objects of the present invention to provide a lens system intended for microscopic observation and associable with an image acquisition device which is improved over prior-art ones.

According to the present invention, this and other objects are achieved through a lens system comprising the technical features set out in the appended independent claim.

An advantageous aspect of the present invention lies in the fact that it provides a lens system that allows the use of a plurality of lenses and is also compatible with other optical devices. This is made possible also by the fact that the system makes use of two substantially flat outer surfaces, one of which is in contact with the camera, while the other one is in contact with the slide prepared with the sample to be observed. Focus adjustment is achieved by changing the distance between the lenses via compression of a lateral elastic support. Advantageously, this configuration permits obtaining an ideally null work distance (or anyway shorter than 0.25 mm), which does not change with support compression.

A further advantageous aspect of the present invention is to provide a lens system that is suitable for use for immersion microscopy (i.e. with a liquid filling the space between the sample and the magnification lens). This is made possible by the structure of the system, particularly also because the outer surface facing towards the sample is substantially flat.

Another advantageous aspect of the present invention lies in the fact that there is a surface in direct contact with the sample or the sample-carrying slide. This results in a minimized work distance (ideally null, but anyway shorter than 0.25 mm). Furthermore, the work distance is not affected by the compression applied onto the system. In addition, also because of the separation portion made of elastic material, it is possible to adjust the focus by changing the internal distance between the lenses that constitute the objective. Focusing can therefore be adjusted without modifying the work distance. The fixed work distance makes focusing simple, particularly when the system is used in association with portable cameras.

A further advantageous aspect of the present invention is that it provides a lens system that can be adapted to different types of image acquisition devices, and particularly to different camera models having different focal lengths. Likewise, it is possible to bring into focus samples under object-covering slides having different thickness without having to move the system away from the slide to be observed.

An additional advantageous aspect of the present invention is that it provides a less expensive lens system. The structure of such a system is actually quite simple and uses low-cost materials, as opposed to what is typically the case in the mini-optics and micro-optics industry. In such fields, extremely precise adjustment methods are generally resorted to, which imply a considerable cost increase. Thanks to the possibility of manual fine adjustment of the distance between the lenses, the present invention allows using less stringent tolerances during the manufacturing process, thus considerably reducing the overall costs.

It is to be understood that the appended claims are an integral part of the technical teachings provided in the following detailed description of the invention. In particular, the appended dependent claims define some preferred embodiments of the present invention, which include some optional technical features.

Further features and advantages of the present invention will become apparent from the following detailed description, which is supplied merely by way of non-limiting example with particular reference to the annexed drawings, which will be summarized below.

As can be understood, unless otherwise specified, the drawings to which reference will be made herein are not in scale, the aim thereof being to illustrate the principles of the present invention.

### Brief description of the drawings

Figure 1 is a schematic sectional elevation view of a lens system made in accordance with an exemplary embodiment of the present invention.
Figure 2 is a schematic sectional elevation view of a lens system made in accordance with a further exemplary embodiment of the present invention.
Figure 3 is a schematic sectional elevation view of a lens system made in accordance with a further exemplary embodiment of the present invention.
Figure 4 is a schematic view similar to those of the preceding figures, which illustrates a lens system made in accordance with an exemplary embodiment of the present invention, together with a sample and an image acquisition device. This figure represents one possible mode of use of the system.

### Detailed description of the invention

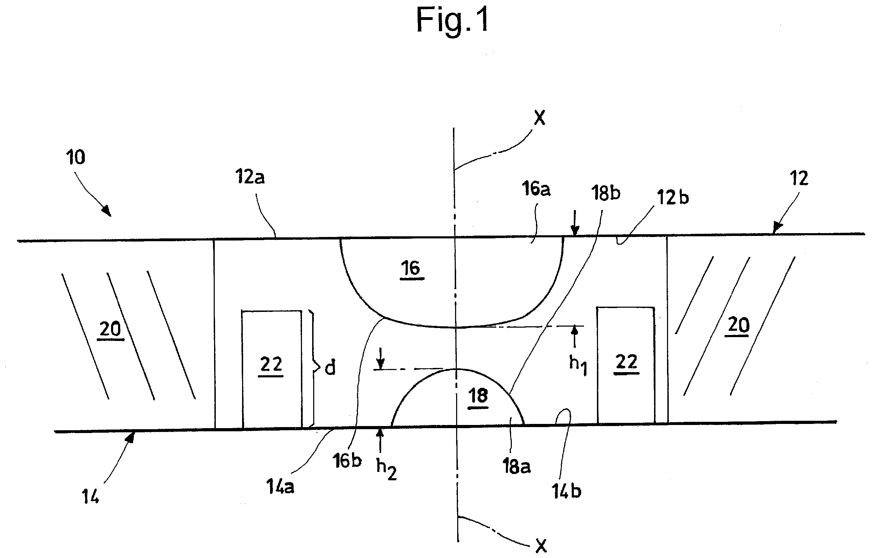

With reference to Figure 1, numeral 10 designates as a whole a lens system intended for microscopic observation and operationally associable with an image acquisition device and a light source. System 10 is made in accordance with one exemplary embodiment of the present invention.

In the following detailed description, terms or expressions such as "axial" or "axially", "lateral" or "laterally", "inwards" and "outwards" will refer to the axis X-X, which is visible in Figure 1 and which will be defined more in detail hereinafter.

System 10 comprises a pair of thin films made of transparent and incompressible material. More in detail, there is a first thin film, designated as 12, and a second thin film, designated as 14.

The first thin film 12 has a substantially flat first outer surface 12a intended to face towards an external image acquisition device. The first thin film 12 also has a substantially flat first inner surface 12b facing towards the opposite side with respect to the first outer surface 12a and towards the inside of system 10.

The second thin film 14 has a substantially flat second outer surface 14a intended to face towards an external sample to be observed. The second thin film 14 also has a substantially flat second inner surface 14b facing towards the opposite side with respect to the second outer surface 14a and towards the inside of system 10.

System 10 further comprises a pair of lenses having a short focal length and made of transparent material. More in detail, there is a first lens, designated as 16, and a second lens, designated as 18.

The first lens 16 has a substantially flat first contact surface 16a coupled to the first inner surface 12b; the first lens 16 also has a first curved surface 16b.

The second lens 18 has a substantially flat second contact surface 18a coupled to the second inner surface 14b; the second lens 18 also has a second curved surface 18b facing towards the first curved surface 16b, such surfaces being in particular aligned with or facing each other along the same optical axis X-X.

System 10 further comprises a separation portion 20 made of compressible elastic material. Separation portion 20 is positioned between inner surfaces 12b and 14b. Moreover, separation portion 20 is positioned laterally outwards relative to lenses 16 and 18, so as to space out curved surfaces 16b and 18b, which operationally face each other.

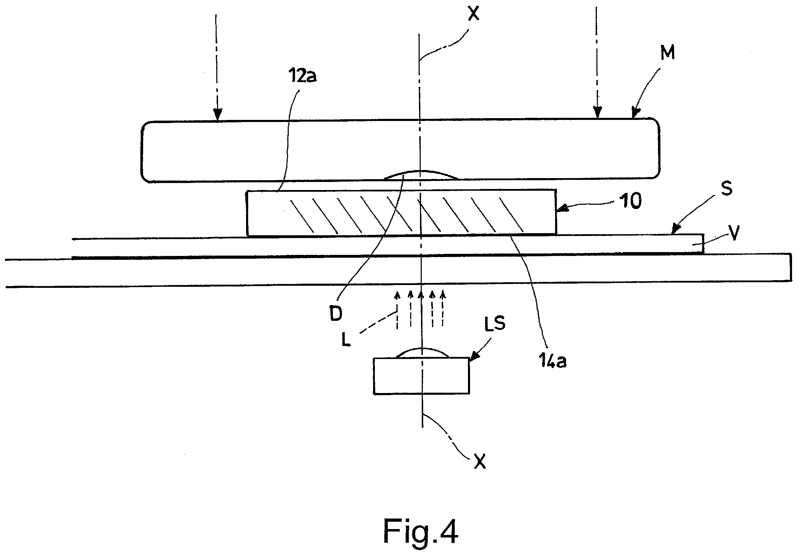

With particular reference also to Figure 4, it must be pointed out that system 10 is intended to be positioned with the second flat surface 14a in contact with a sample S to be observed, which is generally contained in a slide V.

Still with particular reference to Figure 4, system 10 is also intended to receive, in abutment on the first flat surface 12a, an image acquisition device D, in particular an external camera (e.g. included in a mobile phone or smartphone M).

During use, system 10 is then subjected to light compression when image acquisition device D is pushed towards sample S to be observed, in order to bring said sample into focus.

With particular reference to Figure 4, a light source LS is used in order to ensure an adequate level of illumination and correct focusing of system 10. By way of example, light L emitted by light source LS may be either collimated or convergent. Typically, said light source LS is disposed towards sample S to be observed. In particular, light source LS is directed towards slide V containing said sample, which is located on the opposite side with respect to system 10.

In particular, light source LS is intended to be operationally aligned with optical axis X-X of lenses 16, 18 of system 10.

Preferably, light source LS comprises a LED, with or without collimating optics.

By way of non-limiting example, said LED may be arranged at a distance of 0 to 50 mm from the object-carrying slide.

According to an exemplary embodiment of the present invention, the resolution of system 10 is less than 3 µm and the magnification values may be in the range of 50x to 120x.

One of the advantages due to the particular configuration of system 10 lies in the fact that the work distance (ideally null, but anyway shorter than 0.25 mm) can be kept constant after changes in samples S to be observed, in the thickness of slide V and in the focal length of the external camera. The contact between system 10 and the sample allows for quick focusing of the system.

A further advantage, due to the presence of a flat surface facing towards sample S to be observed and very close thereto, is the possibility of executing both air microscopy and immersion microscopy.

Another advantage is given by the mode of adjustment of the distance between lenses 16 and 18. In fact, such a mode of adjustment allows system 10 to be used in association with different image acquisition devices D. In particular, system 10 can be adapted to numerous different models of portable cameras for photographic use available on the market, particularly because it can adapt itself to different focal lengths.

An additional advantage is also due to the fact that system 10 permits bringing into focus samples S to be observed contained in slides V of different thickness, without system 10 having to be moved away from slide V.

Preferably, system 10 also comprises an end-of-travel spacer portion 22 made of rigid material. Said end-of-travel spacer portion 22 is located between the two inner surfaces 12b and 14b and is positioned laterally outwards with respect to lenses 16 and 18. More in detail, the end-of-travel spacer portion 22 is configured for limiting compression by abutting against one of inner surfaces 12b and 14b, so as to prevent the distance between lenses 16, 18 from falling below a predefined value.

When system 10 is in use, the first thin film 12 is pushed towards the second thin film 14, thus bringing lenses 16 and 18 closer to each other. As a minimum distance between inner surfaces 12b and 14b is reached, such that any further mutual approaching of curved surfaces 16b and 18b is undesirable, one of the thin films (in the example illustrated in Figure 1, the first thin film 12) abuts against spacer portion 22 carried by the inner surface of the other thin film (in the example illustrated in Figure 1, corresponding to the second inner surface 14b belonging to the second thin film 14).

In particular, the adoption of end-of-travel spacer portion 22 serves to ensure that lenses 16 and 18 cannot touch each other. Any contact, in fact, particularly between curved surfaces 16a and 18a, might spoil the shape and/or surfaces thereof.

Moreover, said end-of-travel spacer portion 22 contributes to maintaining a generally planar shape of system 10, so as to limit the risk that different angles might exist between the optical axes of the lenses and common optical axis X-X.

In an advantageous exemplary embodiment, end-of-travel spacer portion 22, which is made of rigid material, has an elevation extension d that is slightly taller than the sum of maximum heights h1 and h2 of curved surfaces 16b and 18b of the two lenses 16 and 18.

In the example illustrated in Figure 1, end-of-travel spacer portion 22 is positioned in a laterally intermediate position between lenses 16 and 18 and separation portion 20.

Preferably, the thickness of the first thin film 12 is less than 1 mm. More preferably, the thickness of the first thin film 12 is less than 0.5 mm.

Preferably, the first thin film 12 - which is made of transparent material - is substantially flexible.

For example, the material of the first thin film 12 is selected from the group including PVC, plasticized PVC, polypropylene, polyethylene, PET, polycarbonate.

Preferably, the first thin film 12 acts as a support for the first lens 16, which is, for example, a planar-convex lens with a short focal length (in particular, shorter than 10 mm).

In the exemplary embodiment illustrated in Figure 1, the focal length of the first lens 16 (which is operationally closer to the image acquisition device) is preferably longer than the focal length of the second lens 18 (which is operationally closer to sample S to be examined).

In further alternative embodiments of the present invention, the first thin film 12 may consist of a slide or the same material as that of the first lens 16.

Preferably, the thickness of the second thin film 14 is less than 0.3 mm.

Preferably, the second thin film 14 - which is made of transparent material - is substantially flexible.

For example, the material of the second thin film 14 is selected from the group including PVC, plasticized PVC, polypropylene, polyethylene, PET, polycarbonate.

Preferably, the second thin film 14 acts as a support for the second lens 18, which is, for example, a planar-convex lens with a short focal length (in particular, shorter than 5 mm).

In further alternative embodiments of the present invention, the second thin film 14 may consist of a slide or the same material as that of the second lens 18.

In further alternative embodiments of the present invention, the second thin film 14 may consist partly of the same material as that of the lens and partly of another material, not necessarily transparent, with a hole in the position corresponding to the lens.

In particular, by way of non-limiting example, the second thin film 14 may be a non-transparent sheet with a hole located at the second lens 18. For instance, in said hole a central portion can be housed and supported, which is made of the same material as the second lens 18. The sheet may be made of polymeric material (e.g. PVC, polyester or polypropylene, possibly coloured) or may be a metal sheet. Advantageously but not necessarily, the sheet forming the thin film 14 may be adhesive, in particular on the side facing towards the inside of system 10 (e.g. inner surface 14b), particularly in such a way as to adhere to the body of the second lens 18.

In the exemplary embodiment illustrated in Figure 1, lenses 16 and 18 are positioned with their respective curved surfaces 16b and 18b facing towards the inside of system 10. In this manner, as aforementioned, optical surfaces 12a and 14a - which are substantially intended to face towards image acquisition device D and, respectively, sample S to be examined - are substantially flat.

In the exemplary embodiment illustrated in Figure 1, separation portion 20 is coupled to regions of inner surfaces 12b and 14b whereto lenses 16 and 18 are not connected. In other words, separation portion 20 is positioned laterally outwards of system 10 between the two inner surfaces 12b and 14b.

Preferably, separation portion 20 comprises a soft elastic material, e.g. having a Young's modulus in the range of 0.01 GPa to 0.1 GPa.

For example, separation portion 20 is made of a material selected from the group including foam polyurethane (polyether and polyester), foam rubber (preferably with closed or semi-closed cells), sponge rubber, silicone foam, expanded EVA and reticulated or expanded polyethylene.

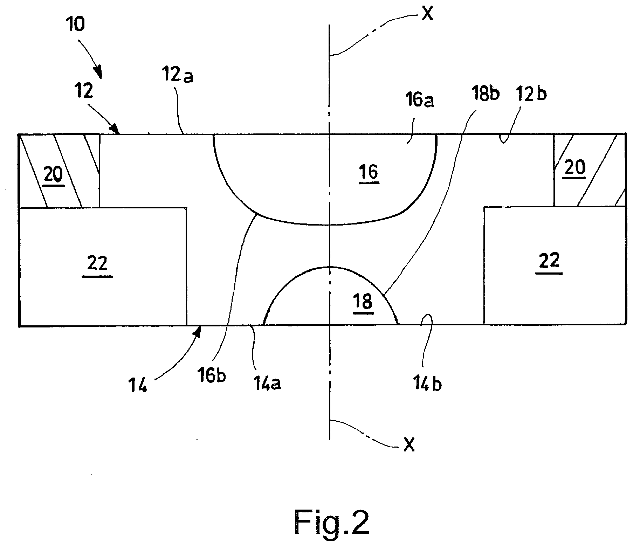

With reference to Figure 2, there is shown a system 10 made in accordance with a further exemplary embodiment of the present invention.

Those parts or elements which are similar to, or perform the same function as, those of the embodiment illustrated in Figure 1 have been assigned the same alphanumerical references. For brevity's sake, the description of such parts and elements will not be repeated below, and reference will be made to the above description.

According to the further exemplary embodiment illustrated in Figure 2, end-of-travel spacer portion 22 is coupled to the inner surface of one of the thin films (in particular, to the second inner surface 14b of the second thin film 14).

According to the further exemplary embodiment illustrated in Figure 2, separation portion 20 is axially positioned between spacer element 22 and the inner surface of the other one of the thin films (in particular, the first inner surface 12b of the first thin film 12).

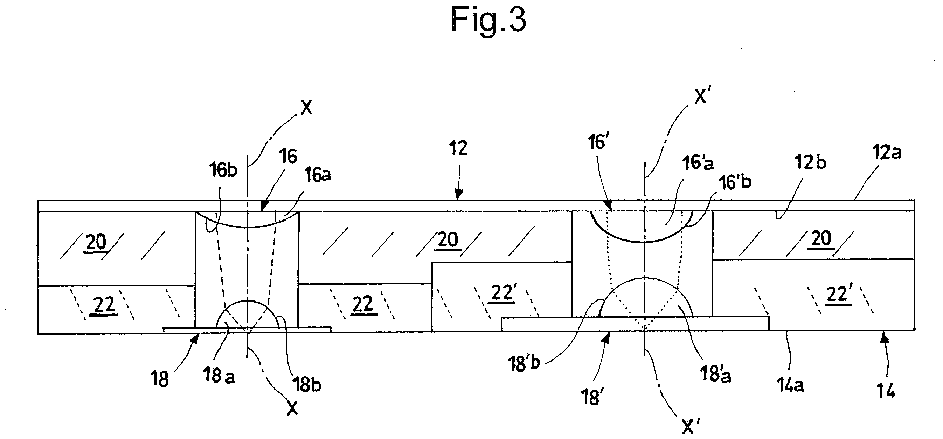

With reference to Figure 3, numeral 10 designates yet another embodiment of the present invention.

In fact, system 10 can be made more complex than the previously mentioned embodiments, particularly by increasing the number of lenses and/or by using separation portions having materials with different elasticity for separating the different lenses.

Those parts or elements which are similar to, or perform the same function as, those of the embodiments illustrated in Figures 1 and 2 have been assigned the same alphanumerical references. For brevity's sake, the description of such parts and elements will not be repeated below, and reference will be made to the above description.

In the embodiment illustrated in Figure 3, system 10 comprises a plurality of pairs of lenses laterally spaced out, which create mini-objectives with different focal lengths, and therefore different magnification levels; the lens assemblies of these mini-objectives may have the same total thickness, and permit an ideally null work distance.

More in detail, the system illustrated in Figure 3 comprises the two thin films 12 and 14, made of transparent material and having substantially flat surfaces, which support lenses 16, 18 as previously described.

However, unlike the previously described embodiments, system 10 includes a pair of lenses 16 and 18 and an additional pair of lenses 16' and 18' with a short focal length and made of transparent material.

More in detail, there is an additional first lens 16' having an additional first flat contact surface 16'a coupled to the first inner surface 12b, and an additional first curved surface 16'b. Furthermore, there is an additional second lens 18' having an additional second flat contact surface 18'a coupled to the second inner surface 14b, and an additional second curved surface 18'b facing towards the additional first curved surface 16'b.

The first lens 16 and the second lens 18 are aligned with or face each other along a common optical axis X-X, whereas the additional first lens 16' and the additional second lens 18' are aligned with or face each other along an additional optical axis X'-X'.

In the embodiment illustrated in Figure 3, separation portion 20 extends laterally outwards with respect to the first pair of lenses 16 and 18 and the additional pair of lenses 16' and 18', and also in the intermediate space between said pairs of lenses.

Preferably, there is an additional end-of-travel spacer portion 22' made of rigid material and located between inner surfaces 12b, 14b. In particular, end-of-travel spacer portion 22' is positioned laterally with respect to additional lenses 16' and 18'.

In the embodiment shown in Figure 3, end-of-travel spacer portion 22 and additional end-of-travel spacer portion 22' are disposed in mutual lateral adjacency.

Furthermore, in the exemplary configuration shown in Figure 3, the pairs of lenses 16, 18 and 16', 18' have different focal lengths, due to different lens assemblies and different thicknesses of the rigid surface portions whereon the second lenses 18 and 18' rest, which will be placed near the sample. Therefore, the height of end-of-travel portion 22 is preferably different from the height of additional end-of-travel portion 22'. However, in alternative embodiments it is conceivable to employ lenses with appropriate technical characteristics (in particular, focal length and thickness), wherein the height of end-of-travel spacer portion 22 and 22' may be the same for all pairs of lenses 16, 18 and 16', 18'.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Lens system (10) intended for microscopic observation and operationally associable with an image acquisition device (D) and a light source (L), said system comprising:
- a pair of thin films (12, 14) made of transparent and incompressible material, including
a first thin film (12) having a substantially flat first outer surface (12a) intended to face towards an external image acquisition device (D), and a substantially flat first inner surface (12b) facing towards the opposite side with respect to the first outer surface (12a) and towards the inside of the system (10), and
a second thin film (14) having a substantially flat second outer surface (14a) intended to face towards an external sample (S) to be observed, and a substantially flat second inner surface (14b) facing towards the opposite side with respect to the second outer surface (14a) and towards the inside of the system (10);
- at least one pair of lenses (16, 18) having a short focal length and made of transparent material, including
a first lens (16) having a first flat contact surface (16a) coupled to said first inner surface (12b), and a first curved surface (16b), and
a second lens (18) having a second flat contact surface (18a) coupled to said second inner surface (14b), and a second curved surface (18b) facing towards said first curved surface (16b);
- a separation portion (20) positioned between said inner surfaces (12b, 14b) and positioned laterally relative to said lenses (16, 18), so as to space out said curved surfaces (16b, 18b);
**characterized in that** said separation portion (20) is made of compressible elastic material;
**in that** such system further comprises an end-of-travel spacer portion (22) made of rigid material and located between said inner surfaces (12b, 14b); and
**in that** said end-of-travel spacer portion (22) is configured for abutting against one of said inner surfaces (12b, 14b), so as to prevent the distance between the lenses (16, 18) from falling below a predefined value.

2. System according to claim 1, wherein said end-of-travel spacer portion (22) is coupled to the inner surface (14b) of one of the thin films (14).

3. System according to claim 1 or 2, wherein said end-of-travel spacer portion (22) is positioned laterally outwards with respect to said lenses (16, 18).

4. System according to claim 3, wherein said end-of-travel spacer portion (22) is positioned laterally inwards with respect to said separation portion (20).

5. System according to claim 2, wherein the separation portion (20) is axially positioned between the end-of-travel spacer portion (22) and the inner surface (12b) of the other one of the thin films (12).

6. System according to any one of the preceding claims, wherein the thickness of said first thin film (12) is less than 1 mm and preferably less than 0.5 mm.

7. System according to any one of the preceding claims, wherein the material of at least one of said first thin film (12) and said second thin film (14) is selected from the group including PVC, plasticized PVC, polypropylene, polyethylene, PET, polycarbonate.

8. System according to any one of the preceding claims, wherein the focal length of said first lens (16) is longer than the focal length of said second lens (18).

9. System according to any one of the preceding claims, wherein the thickness of the second thin film (14) is less than 0.3 mm.

10. System according to any one of the preceding claims, wherein said second thin film (14) comprises a slide.

11. System according to any one of claims 1 to 9, wherein said second thin film (14) comprises a support sheet with a hole located at said second lens (18).

12. System according to claim 11, wherein said support sheet is made of non-transparent material.

13. System according to claim 11 or 12, wherein said support sheet is made of polymeric material, possibly coloured, or metallic material.

14. System according to any one of claims 11 to 13, wherein in said hole a central portion is housed and supported, which is made of the same material as said second lens (18).

15. System according to any one of claims 11 to 14, wherein said support sheet is adhesive on the side (14b) facing towards the inside of the lens system (10).

16. System according to any one of the preceding claims, wherein said separation portion (20) comprises a soft elastic material, e.g. having a Young's modulus in the range of 0.01 GPa to 0.1 GPa.

17. System according to any one of the preceding claims, wherein said separation portion (20) is made of a material selected from the group including foam polyurethane, foam rubber, sponge rubber, silicone foam, expanded EVA and reticulated or expanded polyethylene.

18. System according to any one of the preceding claims, comprising an additional pair of lenses (16', 18') having a focal length which is different from that of said pair of lenses (16, 18), including:
- an additional first lens (16') having an additional first flat contact surface (16'a) coupled to said first inner surface (12b), and an additional first curved surface (16'b), and
- an additional second lens (18') having an additional second flat contact surface (18'a) coupled to said second inner surface (14b), and an additional second curved surface (18'b) facing towards said additional first curved surface (16'b).

## Patentansprüche

1. Linsensystem (10), das für die mikroskopische Beobachtung bestimmt ist und betriebsbereit mit einer Bilderfassungsvorrichtung (D) und einer Lichtquelle (L) verbunden werden kann, wobei das System Folgendes aufweist:
- ein Paar dünner Folien (12, 14) aus transparentem und inkompressiblem Material, einschließlich
einer ersten dünnen Folie (12) mit einer im Wesentlichen flachen ersten Außenfläche (12a), die dazu bestimmt ist, einer externen Bilderfassungsvorrichtung (D) zugewandt zu sein, und einer im Wesentlichen flachen ersten Innenfläche (12b), die der gegenüberliegenden Seite in Bezug auf die erste Außenfläche (12a) und dem Inneren des Systems (10) zugewandt ist, und
einer zweiten dünnen Folie (14) mit einer im Wesentlichen flachen zweiten Außenfläche (14a), die dazu bestimmt ist, einer zu beobachtenden externen Probe (S) zugewandt zu sein, und einer im Wesentlichen flachen zweiten Innenfläche (14b), die der gegenüberliegenden Seite in Bezug auf die zweite Außenfläche (14a) und dem Inneren des Systems (10) zugewandt ist;
- mindestens ein Linsenpaar (16, 18) mit einer kurzen Brennweite und aus transparentem Material, einschließlich
einer ersten Linse (16) mit einer ersten flachen Kontaktfläche (16a), die mit der ersten Innenfläche (12b) verbunden ist, und einer ersten gekrümmten Fläche (16b), und
einer zweiten Linse (18) mit einer zweiten flachen Kontaktfläche (18a), die mit der zweiten Innenfläche (14b) verbunden ist, und einer zweiten gekrümmten Fläche (18b), die der ersten gekrümmten Fläche (16b) zugewandt ist;
- einen Trennabschnitt (20), der zwischen den Innenflächen (12b, 14b) und seitlich relativ zu den Linsen (16, 18) angeordnet ist, um die gekrümmten Flächen (16b, 18b) zu beabstanden;
**dadurch gekennzeichnet, dass** der Trennabschnitt (20) aus komprimierbarem elastischem Material besteht;
**dass** ein solches System ferner einen Endabstandshalterabschnitt (22) aufweist, der aus starrem Material besteht und zwischen den Innenflächen (12b, 14 b) angeordnet ist; und
**dass** der Endabstandshalterabschnitt (22) so konfiguriert ist, dass er an einer der Innenflächen (12b, 14b) anliegt, um zu verhindern, dass der Abstand zwischen den Linsen (16, 18) unter einen vordefinierten Wert fällt.

2. System nach Anspruch 1, wobei der Endabstandshalterabschnitt (22) mit der Innenfläche (14b) einer der dünnen Folien (14) verbunden ist.

3. System nach Anspruch 1 oder 2, wobei der Endabstandshalterabschnitt (22) in Bezug auf die Linsen (16, 18) seitlich nach außen angeordnet ist.

4. System nach Anspruch 3, wobei der Endabstandshalterabschnitt (22) seitlich nach innen in Bezug auf den Trennabschnitt (20) positioniert ist.

5. System nach Anspruch 2, wobei der Trennabschnitt (20) axial zwischen dem Endabstandshalterabschnitt (22) und der Innenfläche (12b) der anderen der dünnen Folien (12) angeordnet ist.

6. System nach einem der vorhergehenden Ansprüche, wobei die Dicke der ersten dünnen Folie (12) weniger als 1 mm und vorzugsweise weniger als 0,5 mm beträgt.

7. System nach einem der vorhergehenden Ansprüche, wobei das Material mindestens einer der ersten dünnen Folie (12) und der zweiten dünnen Folie (14) aus der Gruppe ausgewählt ist, die PVC, weichgemachtes PVC, Polypropylen, Polyethylen, PET und Polycarbonat umfasst.

8. System nach einem der vorhergehenden Ansprüche, wobei die Brennweite der ersten Linse (16) länger ist als die Brennweite der zweiten Linse (18).

9. System nach einem der vorhergehenden Ansprüche, wobei die Dicke der zweiten dünnen Folien (14) weniger als 0,3 mm beträgt.

10. System nach einem der vorhergehenden Ansprüche, wobei die zweite dünne Folie (14) ein Gleitmittel umfasst.

11. System nach einem der Ansprüche 1 bis 9, wobei die zweite dünne Folie (14) eine Trägerfolie mit einem an der zweiten Linse (18) befindlichen Loch aufweist.

12. System nach Anspruch 11, wobei die Trägerfolie aus einem undurchsichtigen Material hergestellt ist.

13. System nach Anspruch 11 oder 12, wobei die Trägerfolie aus polymerem, möglicherweise gefärbtem oder metallischem Material besteht.

14. System nach einem der Ansprüche 11 bis 13, wobei in dem Loch ein zentraler Teil untergebracht und gehalten wird, der aus dem gleichen Material wie die zweite Linse (18) besteht.

15. System nach einem der Ansprüche 11 bis 14, wobei die Trägerfolie auf der zum Inneren des Linsensystems (10) weisenden Seite (14b) klebend ist.

16. System nach einem der vorhergehenden Ansprüche, wobei der Trennabschnitt (20) ein weiches elastisches Material aufweist, z.B. mit einem Elastizitätsmodul im Bereich von 0,01 GPa bis 0,1 GPa.

17. System nach einem der vorhergehenden Ansprüche, wobei der Trennabschnitt (20) aus einem Material besteht, das aus der Gruppe ausgewählt ist, die Schaumpolyurethan, Schaumgummi, Moosgummi, Silikonschaum, expandiertes EVA und netzförmiges oder expandiertes Polyethylen umfasst.

18. System nach einem der vorangehenden Ansprüche, aufweisend ein zusätzliches Linsenpaar (16', 18') mit einer Brennweite, die sich von der des Linsenpaars (16, 18) unterscheidet, einschließlich:
- einer zusätzlichen ersten Linse (16') mit einer zusätzlichen ersten flachen Kontaktfläche (16'a), die mit der ersten Innenfläche (12b) verbunden ist, und einer zusätzlichen ersten gekrümmten Fläche (16'b),
und
- einer zusätzlichen zweiten Linse (18') mit einer zusätzlichen zweiten flachen Kontaktfläche (18'a), die mit der zweiten Innenfläche (14b) verbunden ist, und einer zusätzlichen zweiten gekrümmten Fläche (18'b), die der zusätzlichen ersten gekrümmten Fläche (16'b) zugewandt ist.

## Revendications

1. Système (10) de lentille destiné à une observation microscopique et pouvant être associé de manière fonctionnelle à un dispositif d'acquisition d'image (D) et à une source de lumière (L), ledit système comprenant :
- une paire de films minces (12, 14) constitués d'un matériau transparent et incompressible, comportant
un premier film mince (12) ayant une première surface extérieure (12a) sensiblement plane destinée à être orientée vers un dispositif d'acquisition d'image (D) externe, et une première surface intérieure (12b) sensiblement plane étant orientée vers le côté opposé par rapport à la première surface extérieure (12a) et vers l'intérieur du système (10), et
un second film mince (14) ayant une seconde surface extérieure (14a) sensiblement plane destinée à être orientée vers un échantillon (S) externe à observer, et une seconde surface intérieure (14b) sensiblement plane étant orientée vers le côté opposé par rapport à la seconde surface extérieure (14a) et vers l'intérieur du système (10) ;
- au moins une paire de lentilles (16, 18) ayant une courte longueur focale et étant constituées d'un matériau transparent, comportant
une première lentille (16) ayant une première surface de contact plane (16a) couplée à ladite première surface intérieure (12b), et une première surface incurvée (16b), et
une seconde lentille (18) ayant une seconde surface de contact plane (18a) couplée à ladite seconde surface intérieure (14b), et une seconde surface incurvée (18b) étant orientée vers ladite première surface incurvée (16b) ;
- une partie de séparation (20) positionnée entre lesdites surfaces intérieures (12b, 14b) et positionnée latéralement par rapport auxdites lentilles (16, 18), de façon à espacer lesdites surfaces incurvées (16b, 18b) ; **caractérisé en ce que** ladite partie de séparation (20) est constituée d'un matériau élastique compressible ;
**en ce qu'**un tel système comprend en outre une partie d'espacement de fin de course (22) constituée d'un matériau rigide et située entre lesdites surfaces intérieures (12b, 14b) ; et
**en ce que** ladite partie d'espacement de fin de course (22) est configurée pour venir en butée contre l'une desdites surfaces intérieures (12b, 14b), de façon à empêcher la distance entre les lentilles (16, 18) de tomber en dessous d'une valeur prédéfinie.

2. Système selon la revendication 1, dans lequel ladite partie d'espacement de fin de course (22) est couplée à la surface intérieure (14b) de l'un des films minces (14).

3. Système selon la revendication 1 ou 2, dans lequel ladite partie d'espacement de fin de course (22) est positionnée latéralement vers l'extérieur par rapport auxdites lentilles (16, 18).

4. Système selon la revendication 3, dans lequel ladite partie d'espacement de fin de course (22) est positionnée latéralement vers l'intérieur par rapport à ladite partie de séparation (20).

5. Système selon la revendication 2, dans lequel la partie de séparation (20) est positionnée axialement entre la partie d'espacement de fin de course (22) et la surface intérieure (12b) de l'autre des films minces (12).

6. Système selon l'une quelconque des revendications précédentes, dans lequel l'épaisseur dudit premier film mince (12) est inférieure à 1 mm et de préférence inférieure à 0,5 mm.

7. Système selon l'une quelconque des revendications précédentes, dans lequel le matériau d'au moins l'un dudit premier film mince (12) et dudit second film mince (14) est choisi dans le groupe comportant le PVC, le PVC plastifié, le polypropylène, le polyéthylène, le PET, le polycarbonate.

8. Système selon l'une quelconque des revendications précédentes, dans lequel la longueur focale de ladite première lentille (16) est plus longue que la longueur focale de ladite seconde lentille (18).

9. Système selon l'une quelconque des revendications précédentes, dans lequel l'épaisseur du second film mince (14) est inférieure à 0,3 mm.

10. Système selon l'une quelconque des revendications précédentes, dans lequel ledit second film mince (14) comprend une lamelle.

11. Système selon l'une quelconque des revendications 1 à 9, dans lequel ledit second film mince (14) comprend une feuille de support avec un trou situé au niveau de ladite seconde lentille (18).

12. Système selon la revendication 11, dans lequel ladite feuille de support est constituée d'un matériau non transparent.

13. Système selon la revendication 11 ou 12, dans lequel ladite feuille de support est constituée d'un matériau polymère, possiblement coloré, ou d'un matériau métallique.

14. Système selon l'une quelconque des revendications 11 à 13, dans lequel dans ledit trou une partie centrale est logée et supportée, laquelle est constituée du même matériau que ladite seconde lentille (18).

15. Système selon l'une quelconque des revendications 11 à 14, dans lequel ladite feuille de support est adhésive sur le côté (14b) étant orienté vers l'intérieur du système (10) de lentille.

16. Système selon l'une quelconque des revendications précédentes, dans lequel ladite partie de séparation (20) comprend un matériau élastique mou, par exemple ayant un module de Young dans la plage de 0,01 GPa à 0,1 GPa.

17. Système selon l'une quelconque des revendications précédentes, dans lequel ladite partie de séparation (20) est constituée d'un matériau choisi dans le groupe comportant la mousse de polyuréthane, la mousse de caoutchouc, le caoutchouc spongieux, la mousse de silicone, l'EVA expansé et le polyéthylène réticulé ou expansé.

18. Système selon l'une quelconque des revendications précédentes, comprenant une paire additionnelle de lentilles (16', 18') ayant une longueur focale qui est différente de celle de ladite paire de lentilles (16, 18), comportant :
- une première lentille (16') additionnelle ayant une première surface de contact plane (16'a) additionnelle couplée à ladite première surface intérieure (12b), et une première surface incurvée (16'b) additionnelle, et
- une seconde lentille (18') additionnelle ayant une seconde surface de contact plane (18'a) additionnelle couplée à ladite seconde surface intérieure (14b), et une seconde surface incurvée (18'b) additionnelle étant orientée vers ladite première surface incurvée (16'b) additionnelle.
